# EUROPÄISCHE PATENTSCHRIFT

(11) **EP 3 320 768 B1**
(45) Veröffentlichungstag und Bekanntmachung des Hinweises auf die Patenterteilung: **30.10.2019**
(21) Anmeldenummer: 17200321.2
(22) Anmeldetag: 07.11.2017
(51) Int. Cl.: A01F 15/04, A01F 15/08, A01F 15/10

(54) **KOMBINATION EINES LANDWIRTSCHAFTLICHEN ZUGFAHRZEUGS MIT EINER GROSSBALLENPRESSE UND VERFAHREN ZUM BETREIBEN EINER SOLCHEN KOMBINATION**
COMBINATION OF AN AGRICULTURAL VEHICLE AND A LARGE PRESS AND METHOD FOR THE OPERATION OF SAME
ASSOCIATION DE TRACTEUR AGRICOLE AVEC UNE PRESSE A GROSSES BALLES ET PROCÉDÉ DE FONCTIONNEMENT D'UNE TELLE ASSOCIATION

(30) Priorität: 10.11.2016 DE 102016222118
(43) Veröffentlichungstag der Anmeldung: 16.05.2018
(73) Patentinhaber: Deere & Company, Moline, IL 61265 (US)
(72) Erfinder: Biziorek, Stephane, 68163 Mannheim (DE); Tepe, Heinrich, 68163 Mannheim (DE)
(74) Vertreter: Reichert, Christian

(56) Entgegenhaltungen:
- WO-A1-2014/125029
- DE-A1- 10 313 492
- DE-A1- 10 319 985
- DE-C1- 3 809 132

## Beschreibung

Die Erfindung betrifft eine Kombination eines landwirtschaftlichen Zugfahrzeugs mit einer Großpackenpresse zum Pressen von Quaderballen, mit einer Aufnahmeeinrichtung für auf dem Boden liegendes Erntegut, einer Schneideinrichtung zum Schneiden von aufgenommenem Erntegut in wenigstens eine vorgebbare Schnittlänge, einer Vorpresskammer, einer Raffer-Einrichtung, und einem Presskanal zum Pressen eines Quaderballens aus in der Vorpresskammer vorverdichteten Paketen von Erntegut. Die Raffer-Einrichtung verdichtet das Erntegut in der Vorpresskammer in Pakete vor und fördert die Pakete in den Presskanal. Ein Bindesystem ist zum Verschnüren des Quaderballens vorgesehen. Die Schneideinrichtung ist ansteuerbar, derart, dass in Abhängigkeit von einem durch das Bindesystem ausgeführten Bindevorgang und von wenigstens einer das Quaderballenmaß repräsentierenden Größe jeweils bei der Aufnahme von Erntegut für wenigstens einem der ersten und für wenigstens einem der letzten Pakete eines Quaderballenpressvorgangs die Schneideinrichtung deaktivierbar oder mit einer gegenüber den übrigen Paketen größeren Schnittlänge betreibbar ist. Zudem wird ein Verfahren zum Betreiben der Kombination offenbart.

Im Stand der Technik sind Großpackenpressen bekannt. Derartige Pressen weisen eine Pick-up oder Aufnahmeeinrichtung für auf dem Boden liegendes Erntegut auf. Das Erntegut wird aufgenommen und einer Schneideinrichtung zugeführt, wo es zerkleinert wird, wobei die Schneideinrichtung ein vorgebbares Maß der Schnittlänge ermöglicht. Die Schneideinrichtung weist dazu einen Rotor mit Zinken auf, die gegen Messerschneiden rotieren. Die Messerschneiden können in ihrer Lage variabel einstellbar sein, um keinen Schnitt oder verschieden lange Schnittlängen zu ermöglichen. Das gegebenenfalls geschnittene Erntegut wird einer Vorpresskammer zugeführt und in Paketen vorverdichtet. Dazu wird das Erntegut von einem Raffer erfasst und in einen die Vorpresskammer bildenden länglichen Kanal gefördert bzw. gehoben. In der Regel werden ein oder zwei durch den Raffer ausgeübte kurze Hübe von Erntegut vorgepresst und als Paket durch einen längeren Hub in einen quaderförmigen Presskanal gehoben. Sogleich wird das Paket durch einen oszillierenden rechteckigen Kolben erfasst und gegen ein vorher gepresstes Paket gepresst. Durch Aneinanderpressen von mehreren Paketen bildet sich letztendlich ein Quaderballen. Ein Bindesystem dient zum Verschnüren der einzelnen Pakete zu einem Quaderballen, so dass die beim Pressen erzielte Pressdichte des Ballens erhalten bleibt und der gepresste Quader als Ballen weiterverarbeitet bzw. transportiert oder verladen werden kann. Nachteilig wirkt sich aus, dass oftmals bei relativ kurzen Schnittlängen tiefe Einschnitte bzw. tiefe Einschnüren des Bindegarns an den Stirnflächen des Quaderballens zu verzeichnen sind, wodurch der Quaderballen ungünstig unförmig wird und ausfranst. Dies tritt auf, wenn Teile des kurz geschnittenen Ernteguts insbesondere zwischen den Verschnürungen des Quaderballens nicht festgehalten wurden und sich lösen konnten.

Die DE 103 19 985 A1 offenbart eine Rechteckballenpresse mit einer Schneidvorrichtung für zu pressendes Erntegut. Dabei ist vorgesehen, dass die Schneidvorrichtung außer Betrieb genommen werden kann, so dass wahlweise geschnittenes oder nicht geschnittenes Erntegut gepresst wird. Insbesondere ist hier vorgesehen, dass die Schneidvorrichtung am Anfang und am Ende der Ballenbildung außer Betrieb genommen wird, so dass ein Bindegarn dort nur auf ungeschnittenes Erntegut drückt.

In WO 2014/125029 A1 wird eine Rechteckballenpresse offenbart, mit einer Ballenpresskammer und einer Vorkompressionskammer, wobei die Vorkompressionskammer angepasst ist Erntematerial zu sammeln und periodisch vorgepresste Pakete zu bilden, welche in Richtung Ballenpresskammer zur weiteren Ballenbildung durch einen Presskolben gefördert werden. In der Presskammer ist ferner ein optischer Ballenlängensensor vorgesehen, mit dem die Länge des gepressten Ballens bestimmbar ist.

Des Weiteren offenbart die DE 103 13 492 A1 eine Rechteckballenpresse mit einer Sensoreinrichtung, welche den Ballenzuwachs beim Pressen ermittelt und einer Auswerteelektronik, mittels welcher ein Erreichen einer Ballen-Soll-Längenvorgabe errechnet und in Abhängigkeit dessen eine Bindevorrichtung ausgelöst wird.

Die der Erfindung zugrunde liegende Aufgabe wird darin gesehen, eine Großpackenpresse der eingangs genannten Art anzugeben, durch welches die vorgenannten Probleme überwunden bzw. reduziert werden können.

Die Aufgabe wird erfindungsgemäß durch die Lehre des Patentanspruchs 1 und 4 gelöst. Weitere vorteilhafte Ausgestaltungen und Weiterbildungen der Erfindung gehen aus den Unteransprüchen hervor.

Erfindungsgemäß wird eine Kombination aus einem landwirtschaftlichen Zugfahrzeug und einer Großpackenpresse der eingangs genannten Art derart ausgebildet, dass jeweils für das erste Paket oder für mehrere der ersten Pakete eines Quaderballens und für das letzte Paket oder für mehrere der letzten Pakete des Quaderballens eine längere Schnittlänge gewählt werden kann, so dass die Randzonen an den Stirnflächen eines jeden Quaderballens für die Schnüre bzw. das Bindegarn weniger durchlässig sind, bzw. sich die genannten nachteiligen tiefen Einschnitte bzw. tiefe Einschnürungen des Bindegarns an den Stirnflächen des Quaderballens nicht einstellen. Die Kombination aus einem landwirtschaftlichen Zugfahrzeug und einer Großpackenpresse sieht vor, dass eine am landwirtschaftlichen Fahrzeug angeordnete Eingabeeinrichtung vorgesehen ist. Ein für die wenigstens eine das Quaderballenmaß beeinflussenden Größe einstellbarer Wert kann dort von einer Bedienperson eingegeben werden. In Abhängigkeit von dem genannten Wert wird die Schneideinrichtung angesteuert, wobei die Anzahl der Pakete, die mit längerer Schnittlänge verpresst werden, vorgegeben ist, so dass beispielsweise immer die letzten drei und die ersten drei Pakete mit längeren Schnittlängen verpresst werden. Es ist vorgesehen, dass der Wert für eine Anzahl der ersten und der letzten Pakete eines Quaderballenpressvorgangs variabel vorgebbar ist, in Abhängigkeit dessen die Schneideinrichtung angesteuert wird. So kann eine Bedienperson bestimmen, wie viele Pakete mit einer längeren Schnittlänge verarbeitet werden sollen. So wird der Steuereinheit beispielsweise eine Länge "X" für die Länge eines vollendet gepressten und verschnürten Quaderballens vorgegeben. Die elektronische Steuereinheit registriert beispielsweise entsprechend einem Sensorsignal für die von der Raffer-Einrichtung oder einem Presskolben vollzogenen Hübe, die Anzahl der ersten Pakete mit längerer Schnittlänge zu Beginn des Pressvorgangs und vergleicht diese mit der vorgegebenen Anzahl der Pakete mit längerer Schnittlänge. Ist der Wert erreicht, wird die Schneideinrichtung angesteuert und die Schnittlänge auf ein normales Pressmaß reduziert. Ferner wird über einen weiteren Sensor die laufende Länge des Quaderballens ermittelt und registriert, wobei beispielsweise die Länge den Wert "Y" erreicht, wenn die gewünschte vorgegebene Anzahl der ersten Pakete mit größerer Schnittlänge verpresst wurden. Die Steuereinheit setzt diese Größe für die Bestimmung der erneuten Ansteuerung der Schneideinrichtung für die letzten Pakete an, wobei bei Erreichen einer Länge von (X - Y) die Ansteuerung der Schneidvorrichtung erfolgt, damit sich insgesamt der Wert X für die Länge des Quaderballens bei vollendeten Pressvorgang ergibt.

Die wenigstens eine das Quaderballenmaß repräsentierende Größe kann die Quaderballenlänge und/oder die Summe der vorgepressten Pakete sein, wobei eine Längenmesseinrichtung für den gepressten Quaderballen und/oder eine Zähleinrichtung für die vorgepressten Pakete vorgesehen ist. So kann als Längenmesseinrichtung ein Sternenrad eingesetzt werden, wie es an einigen Großpackenpressen bereits die Regel ist, wobei die Umdrehungen des Sternenrads proportional zu der Länge des Quaderballens sind. Ferner können die Hübe der Raffer-Einrichtung durch ein herkömmliches Zählwerk, beispielsweise einem Zählerrad, gezählt werden, wobei die Hübe der Raffer-Einrichtung proportional zu der Anzahl der Pakete sind und die Länge des Quaderballens aus der Anzahl der Pakete ermittelbar ist bzw. durch die Anzahl der Pakete bestimmt ist. Es ist denkbar, dass sowohl die Länge und/oder auch die Anzahl der Pakete der zu pressenden Quaderballen durch einen Betreiber der Großpackenpresse vorwählbar ist.

Die Großpackenpresse umfasst ferner ein Bindesystem zum Binden bzw. Verschnüren des Quaderballens, wobei die wenigstens eine das Quaderballenmaß repräsentierende Größe der Beginn und/oder das Ende eines Bindevorgangs ist. Hierbei wird die Größe durch die Einleitung und den Abschluss des Bindevorgangs für einen Quaderballen definiert bzw. bestimmt, wobei hier auch denkbar ist, dass ein Betreiber der Quaderballenpresse per Kommando den Bindevorgang einleitet, beispielsweise per Knopfdruck, und daraufhin die Schneideinrichtung derart betrieben wird, dass erst nach dem ersten Paket, oder erst nach mehreren der ersten Pakete eine geringere Schnittlänge gewählt wird. Die Länge des Quaderballens kann nach Einleitung des Bindevorgangs durch eine vorgegebene Paketanzahl, oder durch eine vorgegebene Länge bestimmt werden, woraufhin die Schneideinrichtung derart betrieben wird, dass für das letzte Paket, oder für mehrere der letzten Pakete vor Beenden des Bindevorgangs bzw. des endgültigen Verschnürens rechtzeitig eine längere Schnittlänge gewählt wird. Die Einleitung des Bindevorgangs setzt dabei in bekannter Art und Weise vor dem Befördern des ersten Pakets aus der Vorpresskammer in den Presskanal durch Setzen des Bindegarns bzw. eines Knotens ein, wobei das Beenden bzw. Verschnüren des Quaderballens am Ende eines Presszyklus nach dem Befördern des letzten Paketes aus der Vorpresskammer in den Presskanal erfolgt. Generell kann das vorgepresste Erntegut mit nur einem Hub der Raffer-Einrichtung durch die Vorpresskammer befördert werden oder auch mit mehreren Hüben. Diese Einstellung obliegt dem Betreiber, der je nach Erntegut und/oder Erntebedingungen die gewünschte Variante wählt.

Eine elektronische Steuereinheit ist vorgesehen, wobei die Schneideinrichtung eine elektronisch ansteuerbare Stelleinrichtung umfasst. Der Steuereinheit kann ein Steuersignal oder Sensorsignal zugeführt werden, welches in Abhängigkeit von der wenigstens einen das Quaderballenmaß repräsentierenden Größe erzeugbar ist. Die elektronische Steuereinheit steuert in Abhängigkeit des Steuersignals die Schneideinrichtung an. Die durch die Steuereinheit elektronisch ansteuerbare Stelleinrichtung verstellt in der Schneideinrichtung vorgesehene Schneidinstrumente, die beispielsweise als aus- und einschwenkbare Messer ausgebildet sind. Das Aus- und Einschwenken der Messer kann durch hydraulische oder elektrische Aktuatoren erfolgen. Die Messer können in einer oder mehreren Gruppen angeordnet sein, so dass beispielsweise jedes Messer oder jedes zweite bzw. dritte Messer der in einer Reihe angeordneten Messer miteinander in einer Schwenkeinrichtung gekoppelt ist. So können die Messer in einer Gruppe oder in zwei oder mehr Gruppen unabhängig voneinander aus- oder eingeschwenkt werden. Bei der Anordnung der Messer in nur einer Gruppe kann nur zwischen einer Schnittgutlänge die die Aufnahmeeinrichtung liefert (also einer Schnittgutlänge mit der das Erntegut vom Boden aufgenommen wird) und einer durch die Schneideinrichtung reduzierten Schnittlänge gewählt werden. Bei der Anordnung der Messer in mehreren Gruppen können hingegen weitere Schnittlängen eingestellt werden.

Das Verfahren zum Betreiben einer Großpackenpresse mit oben beschriebenen Kombination umfasst einen Bindevorgang für einen zu pressenden Quaderballen, einen Quaderballenpressvorgang, das Ansteuern der Schneideinrichtung in Abhängigkeit des Bindevorgangs und einer ein Quaderballenmaß beeinflussenden Größe während des Quaderballenpressvorgangs, wobei das Ansteuern der Schneideinrichtung während des Beginns und des Endes des Quaderballenpressvorgangs erfolgt, wobei die Schneideinrichtung derart angesteuert wird, dass jeweils bei der Aufnahme von Erntegut für wenigstens eines der ersten und für wenigstens eines der letzten Pakete eines Quaderballenpressvorgangs die Schneideinrichtung deaktiviert oder mit einer gegenüber den übrigen Paketen größeren Schnittlänge betrieben wird. Mit Beginn und Ende des Quaderballenpressvorgangs ist jeweils ein Zeitraum gemeint, der durch die Anzahl der zu pressenden Pakete mit größerer Schnittlänge definiert ist. "Wenigstens eines der ersten Pakete" bzw. "wenigstens eines der letzten Pakete" soll bedeuten, dass hier nur ein Paket oder auch mehrere der ersten bzw. nur ein Paket oder auch mehrere der letzten Pakete mit größerer Schnittlänge verpresst werden können.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische perspektive Seitenansicht einer Kombination einer landwirtschaftlichen Maschine mit einer Großpackenpresse,
- Fig. 2: eine schematische perspektivische Seitenansicht einer Großpackenpresse gemäß Figur 1,
- Fig. 3: eine schematische Querschnittsansicht einer Aufnahmeeinrichtung und Vorpresskammer der Großpackenpresse aus Figur 2 und
- Fig. 4: eine schematische Darstellung eines gepressten Quaderballens.

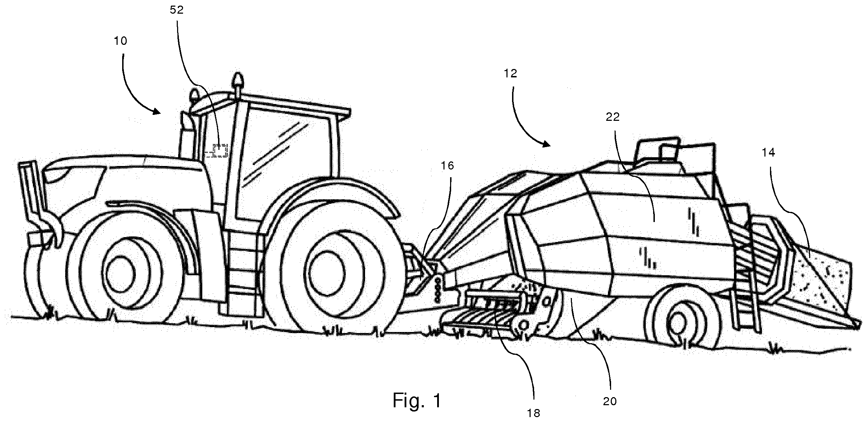

In Figur 1 ist eine Kombination aus einem landwirtschaftlichen Fahrzeug 10, beispielsweise ein Schlepper oder Traktor, und einer Großpackenpresse 12 zum Pressen von Quaderballen 14 gezeigt.

Die Großpackenpresse 12 umfasst eine Anhängekupplung 16, die die Großpackenpresse 12 an das Fahrzeug 10 koppelt und mittels welcher die Großpackenpresse 12 zur Aufnahme von Erntegut über ein Feld gefahren wird. Über eine an der Vorderseite angebrachten Aufnahmeeinrichtung 18 wird gemähtes Erntegut aufgenommen und in eine Vorpresskammer 20 gefördert, von wo aus das vorgepresste Erntegut in einen quaderförmigen Presskanal 22 der Großpackenpresse 12 gelangt.

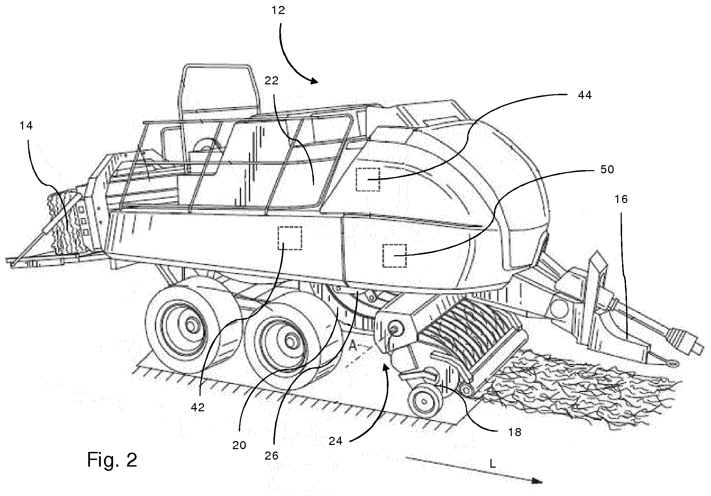

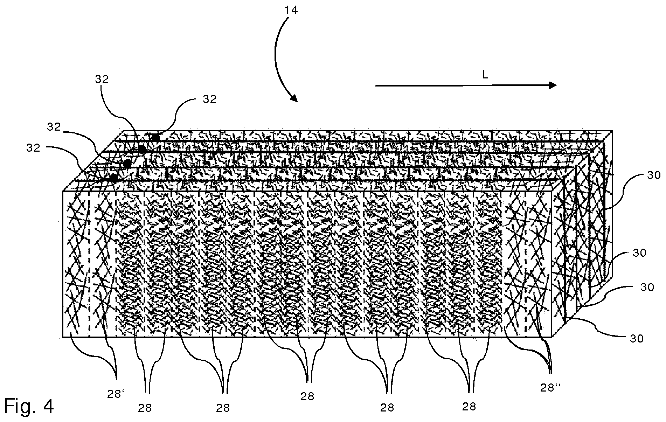

Eine Großpackenpresse 12 ist in weiteren Details in Figur 2 dargestellt. Zwischen der Aufnahmeeinrichtung 18 und der Vorpresskammer 20 ist eine Schneideinrichtung 24 dargestellt, mittels der das aufgenommene Erntegut geschnitten und in die Vorpresskammer 20 gefördert wird. Über eine Raffer-Einrichtung 26 wird das geschnittene Erntegut in einzelnen vorgepressten Paketen 28, 28', 28" in den Presskanal 22 befördert bzw. gehoben, in dem ein Presskolben (nicht gezeigt) die einzelnen in den Presskanal 22 gehobenen Pakete 28, 28', 28" zu einem Quaderballen 14 verpresst. Der Quaderballen 14 wird auf bekannte Weise über eine am Presskanal angeordnete Bindeeinrichtung (nicht geziegt) verschnürt, wobei zu Beginn eines Pressvorgangs über eine Knotereinrichtung (nicht gezeigt) Bindegarn 30 in den Presskanal 22 gelegt wird, welches sich im weiteren Verlauf des Pressvorgangs in Längsrichtung L um den wachsenden Quaderballen 14 legt und welches am Ende des Pressvorgangs durch die Knotereinrichtung mittels Knoten 32 verschnürt wird, wobei mehrere Bindegarne 30 gleichzeitig quer zur Längsrichtung L des Quaderballens versetzt angeordnet sind, wie in Figur 4 gezeigt ist.

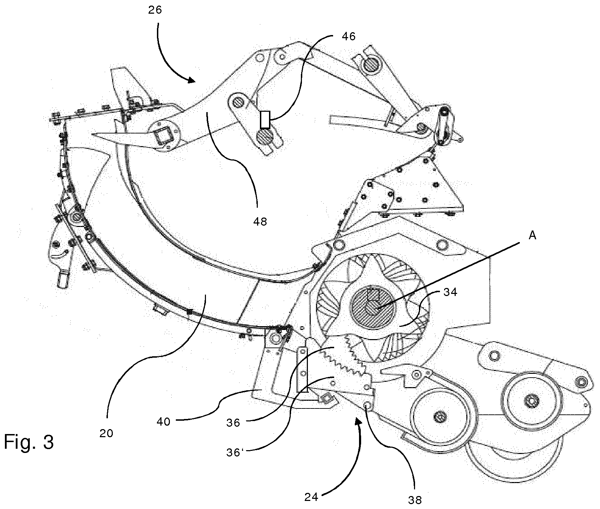

Wie in Figur 3 dargestellt ist, umfasst die Schneideinrichtung 24 eine Rotationsachse A, an der mehrere Förderrotoren 34 angeordnet sind, die mit unterhalb der Rotationsachse A angeordnete Schneidmesser 36, 36' in Eingriff bringbar sind bzw. mit denen in Eingriff stehen. Die Schneidmesser 36, 36' sind entlang der Rotationsachse A in vorgebbaren Abständen an einer Schwenkachse 38 schwenkbar angeordnet und können über eine Schwenkeinrichtung 40 ein- bzw. ausgeschwenkt werden und dadurch mit den Förderrotoren 34 in Eingriff gebracht bzw. aus dem Eingriff heraus geschwenkt werden. Das Ein- und Ausschwenken der Schneidmesser erfolgt über nicht dargestellte Aktuatoren, die mit der Schwenkeinrichtung 40 verbunden sind, wobei mehr als ein Satz Schneidmesser 36, 36' getrennt voneinander ein- bzw. ausschwenkbar ist. Figur 3 zeigt einen ersten Satz von Schwenkmessern 36, die mit den Förderrotoren 34 in Eingriff stehen und einen weiteren Satz von Schwenkmessern 36', die nicht mit den Förderrotoren 34 im Eingriff stehen. Hierbei ist es möglich, sowohl den einen Satz von Schneidmessern 36 als auch den weiteren Satz von Schneidmessern 36' gemeinsam in Eingriff zu bringen oder auch gemeinsam aus dem Eingriff heraus zu schwenken. Denkbar ist es, auch nur einen oder mehrere weitere Sätze von Schneidmessern vorzusehen.

Über einen am Presskanal 22 angeordneten Längensensor 42 wird eine Längenmessung am Quaderballen 14 vorgenommen, wobei der Quaderballen 14 während des Pressvorgangs mit jedem zugeführten Paket 28, 28', 28" in seiner Länge zunimmt. Der Längensensor 42 kann beispielsweise als ein mit einer Oberfläche des Quaderballens im Eingriff stehendes Sensorrad ausgebildet sein, wobei während des Pressvorgangs über die Umdrehungen des Sensorrades in situ auf die (anwachsende) Länge des Quaderballens 14 geschlossen werden kann. Ein weiterer Sensor 44, beispielsweise in Form eines Schalters, ist im Bereich der Knotereinheit vorgesehen und signalisiert den Beginn und/oder das Ende eines Pressvorgangs, nämlich wenn das Bindegarn 30 ausgelegt bzw. die Knoten gesetzt werden. Ein weiterer Sensor 46 ist am Presskolben oder, wie in Figur 3 dargestellt ist, an der Raffer-Einheit angeordnet und signalisiert die Anzahl der Hübe des Presskolbens bzw. eines Raffers 48 in der Raffer-Einheit. Ein derartiger Sensor kann beispielsweise als Magnetsensor oder Umdrehungssensor ausgebildet sein, der an einer Welle angeordnet ist, die eine den Hüben des Presskolbens oder des Raffers 48 proportionale Umdrehungszahl besitzt. Über die Anzahl der Hübe des Presskolbens oder des Raffers 48 kann auf die Anzahl der einzelnen vorgepressten Pakete 28, 28', 28" geschlossen werden, die durch die Vorpresskammer 20 in den Presskanal 22 gefördert werden. Die geeignete Auswahl und Anordnung der oben genannten Sensoren 42, 44, 46 liegt im Bereich des allgemeinen Fachwissens des Fachmanns und bedarf hier keiner weiteren Erläuterung. Eine an der Großpackenpresse 12 vorgesehene elektronische Steuereinheit 50 dient zur Aufnahme von Sensorsignalen der oben genannten Sensoren 42, 44, 46 und steuert die Schneidvorrichtung 24 in Abhängigkeit der von den Sensoren 42, 44, 46 gelieferten Signale sowie in Abhängigkeit von Parametern, die voreingestellt in der elektronischen Steuereinheit abgelegt sind oder über eine am Fahrzeug 10 angeordnete Eingabeeinheit 52 von einer Bedienperson bedarfsgerecht eingegeben werden können. Als Parameter sind unter anderem eine gewünschte Länge des fertig gepressten Quaderballens 14 sowie eine Anzahl der ersten und letzten Pakete 28', 28", die mit größerer Schnittlänge verpresst werden sollen, vorgesehen. Ferner ist eine Schnittlänge für die Schneideinrichtung 24 voreingestellt bzw. vorgegeben oder kann über die Eingabeeinheit 52 durch die Bedienperson auch bedarfsgerecht vorgegeben werden, so dass eine bedarfsgerechte Auswahl der sich mit den Förderrotoren 34 im Eingriff befindlichen Sätze von Schneidmessern 36, 36' möglich ist. Durch entsprechende in der elektronischen Steuereinheit abgelegte Steueralgorithmen wird der Pressvorgang überwacht und die Schneideinrichtung 24 gemäß den Vorgaben, also gemäß der gewünschten Schnittlängenvariation für die ersten und letzten zu verpressenden Pakete 28', 28" in Verbindung mit den vorgegebenen Parametern für Quaderballenlänge und Anzahl der ersten und letzten Pakete 28', 28", angesteuert.

Im Einzelnen sieht das Verfahren zum Pressen von Quaderballen folgenden Ablauf vor: Das Erntegut wird mittels der Großpackenpresse 12 von der Aufnahmeeinrichtung 18 aufgenommen und auf übliche Weise einer verstellbaren Schneideinrichtung 24 zugeführt. Von dort gelangt das Erntegut in die Vorpresskammer 20 und wird dort mittels der Raffer-Einrichtung 26 zu einzelnen Paketen 28, 28' vorgepresst und in den Presskanal 22 gefördert. Im Presskanal 22 werden die einzelnen Pakete 28, 28', 28" durch den Presskolben zu einen Quaderballen verpresst. Der Bindevorgang wird zu Beginn eines Pressvorgangs für einen neuen Quaderballen gestartet, indem Bindegarn im Presskanal 22 durch die Knotereinrichtung ausgelegt wird, welches sich somit entlang einer in Fahrtrichtung hinteren Stirnseite des Quaderballens 14 erstreckt und sich im weiteren Verlauf des Pressvorgangs entlang der oberen und unteren Längsseiten des Quaderballens 14 in Längsrichtung L erstreckt (siehe Figur 4). Mit Beginn des Pressvorgangs liefert der Längensensor 42 ein Signal proportional zu der anwachsenden Länge des Quaderbballens. Ferner wird zu Beginn des Pressvorgangs eine gegenüber dem weiteren Verlauf des Pressvorgangs größere Schnittlänge gewählt, so dass für das erste oder die ersten Pakete 28' des Quaderballens 14 länger geschnittenes Erntegut verpresst wird. Zudem sind in der Steuereinheit 50 die Werte für die gewünschte Quaderballenlänge (X) und für die Anzahl der ersten und letzten Pakete 28' (1 oder mehrere, wobei in Figur 4 ein Beispiel mit einer Anzahl 2 gewählt wurde) abgelegt bzw. wurden vorgegeben. Nach Erreichen der gewünschten Anzahl von ersten Paketen 28', also gemäß dem in Figur 4 dargestellten Beispiel nach 2 gepressten Paketen 28', erfasst die Steuereinheit 50 die momentane Länge (Y) des bis dahin gepressten Quaderballens 14 und ermittelt so die Länge der 2 ersten gepressten Pakete 28'. Gleichzeitig steuert die Steuereinheit 50 die Schneideinrichtung 24 an und veranlasst die Verstellung der Schneidmesser 36, 36' (die Schneidmesser 36, 36' werden zum Eingriff mit den Förderrotoren 34 verschwenkt), so dass die für den folgenden Pressvorgang vorgesehene Schnittlänge des Ernteguts eingerichtet wird, wobei sich dadurch eine kleinere Schnittlänge als zu Beginn des Pressvorgangs ergibt. Der Pressvorgang wird nunmehr mit kürzerer Schnittlänge fortgesetzt und laufend die Länge des wachsenden Quaderballens 14 ermittelt bzw. vom Längensensor geliefert. Bei Erreichen einer momentanen Länge für den Quaderballen, die der gewünschten Quaderballenlänge (X) minus der Länge der 2 ersten gepressten Pakete 28' (Y) entspricht, also bei einer Länge von X - Y, steuert die Steuereinheit 50 die Schneideinrichtung 24 an und veranlasst erneut die Verstellung der Schneidmesser 36, 36' (die Schneidmesser 36, 36' werden aus dem Eingriff mit den Förderrotoren 34 heraus geschwenkt), so dass die für zum Ende des Pressvorgangs vorgesehene Schnittlänge des Ernteguts eingestellt wird, wobei sich wieder die größere Schnittlänge wie zu Beginn des Pressvorgangs ergibt und für das letzte oder die letzten Pakete 28" des Quaderballens 14 länger geschnittenes Erntegut verpresst wird (gemäß dem in Figur 4 dargestellten Beispiel die letzten 2 gepressten Pakete 28"). Nach Verpressen des oder der letzten Pakete 28" liefert der Längensensor 42 eine Quaderballenlänge , die der gewünschten Länge X entspricht. Nach Verpressen des letzten oder der letzten Pakete 28" greift die Knotereinrichtung ein, indem das Bindegarn über die in Fahrtrichtung vordere Stirnseite des Quaderballens 14 geführt wird und die Enden des Bindegarns in einem Knoten 32 miteinander verknotet werden, so dass die einzeln vorgepressten Pakete 28, 28', 28" zu einem gepressten Quaderballen 14 verschnürt abgelegt werden können. Das Ergebnis ist ein Quaderballen 14, wie er in Figur 4 dargestellt ist, mit mehreren Paketen 28 im mittleren Bereich des Quaderballens 14, die eine kurze Schnittlänge aufweisen und stirnseitigen Paketen 28', 28", die eine längere Schnittlänge aufweisen. Das Ergebnis ist eine gleichmäßigeren Form des Quaderballens und weniger Verlust durch sich vom Quaderballen 14 herunterfallendes Erntegut, da insbesondere aufgrund des länger geschnittenen Ernteguts sich das Bindegarn nicht so tief wie üblicherweise in die Oberfläche des Quaderballens 14 einschnüren kann. Auch wird dadurch insgesamt die Kompression von Erntegut im Quaderballen 14 erhöht.

## Patentansprüche

1. Kombination aus einem landwirtschaftlichen Zugfahrzeug (10) und einer Großpackenpresse (12) zum Pressen von Quaderballen (14), mit einer Aufnahmeeinrichtung (18) für auf dem Boden liegendes Erntegut, einer Schneideinrichtung (24) zum Schneiden von aufgenommenem Erntegut in wenigstens eine vorgebbare Schnittlänge, einer Vorpresskammer (20), einer Raffer-Einrichtung (26), und einem Presskanal (22) zum Pressen eines Quaderballens (14) aus in der Vorpresskammer (20) vorverdichteten Paketen (28, 28', 28") von Erntegut, wobei die Raffer-Einrichtung (26) das Erntegut in der Vorpresskammer (20) in Pakete (28, 28', 28") vorverdichtet und die Pakete (28, 28', 28") in den Presskanal (22) fördert, ferner ein Bindesystem zum Verschnüren des Quaderballens (14) vorgesehen ist, wobei die Schneideinrichtung (24) in Abhängigkeit von einem durch das Bindesystem ausgeführten Bindevorgang und von wenigstens einer das Quaderballenmaß repräsentierenden Größe ansteuerbar ist, derart, dass jeweils bei der Aufnahme von Erntegut für wenigstens einem der ersten und für wenigstens einem der letzten Pakete (28', 28") eines Quaderballenpressvorgangs die Schneideinrichtung (24) deaktivierbar oder mit einer gegenüber den übrigen Paketen (28) größeren Schnittlänge betreibbar ist, **dadurch gekennzeichnet, dass**, mit einer am landwirtschaftlichen Fahrzeug (10) angeordneten Eingabeeinrichtung (52), der für die wenigstens eine das Quaderballenmaß repräsentierende Größe einstellbarer Wert oder der für die wenigstens eine das Quaderballenmaß repräsentierende Größe einstellbarer Wert und ein Wert für eine Anzahl der ersten und der letzten Pakete (28', 28") eines Quaderballenpressvorgangs vorgebbar ist, in Abhängigkeit dessen die Schneideinrichtung (42) ansteuerbar ist.

2. Kombination nach Anspruch 1, **dadurch gekennzeichnet, dass** die wenigstens eine das Quaderballenmaß repräsentierende Größe die Quaderballenlänge und/oder die Summe der vorgepressten Pakete (28, 28', 28") ist, wobei eine Längenmesseinrichtung für den gepressten Quaderballen (14) und/oder eine Zähleinrichtung für die vorgepressten Pakete (28, 28', 28") vorgesehen ist.

3. Kombination nach einem der Ansprüche 1 oder 2, **dadurch gekennzeichnet, dass** eine elektronische Steuereinheit (50) vorgesehen ist und die Schneideinrichtung (24) eine elektronisch ansteuerbare Stelleinrichtung umfasst, wobei der elektronischen Steuereinheit (50) ein Sensorsignal zuführbar ist, welches in Abhängigkeit von der wenigstens einen das Quaderballenmaß repräsentierenden Größe erzeugbar ist, und die elektronische Steuereinheit (50) in Abhängigkeit des Steuersignals die Schneideinrichtung (24) ansteuert.

4. Verfahren zum Betreiben einer Kombination gemäß einem der Patentansprüche 1 bis 3 umfassend: einem Bindevorgang für einen zu pressenden Quaderballen (14), einem Quaderballenpressvorgang, das Ansteuern der Schneideinrichtung (24) in Abhängigkeit des Bindevorgangs und einer ein Quaderballenmaß repräsentierenden Größe während des Quaderballenpressvorgangs, wobei das Ansteuern der Schneideinrichtung (24) während des Beginns und des Endes des Quaderballenpressvorgangs erfolgt, wobei die Schneideinrichtung (50) derart angesteuert wird, dass jeweils bei der Aufnahme von Erntegut für wenigstens eines der ersten und für wenigstens eines der letzten Pakete (28', 28") eines Quaderballenpressvorgangs die Schneideinrichtung (24) deaktiviert oder mit einer gegenüber den übrigen Paketen (28) größeren Schnittlänge betrieben wird.

## Claims

1. Combination of an agricultural towing vehicle (10) and a big baler (2) for pressing square bales (14), having a receiving device (18) for harvested material lying on the ground, a cutting device (24) for cutting picked-up harvested material to at least one predefinable cut length, a pre-pack chamber (20), a gatherer device (26), and a baling channel (22) for baling a square bale (14) from packs (28, 28', 28") of harvested material precompressed in the pre-pack chamber (20), wherein the gatherer device (26) precompresses the harvested material into packs (28, 28', 28") in the pre-pack chamber (20) and conveys the packs (28, 28', 28") into the baling channel (22), and also a binding system for tying up the square bale (14) is provided, wherein the cutting device (24) is controllable depending on a binding operation executed by the binding system and on at least one variable representing a square-bale dimension, such that, in each case when picking up harvested material for at least one of the first and for at least one of the last packs (28', 28") of a square-bale baling operation, the cutting device (24) is able to be deactivated or is operable with a greater cut length compared with the other packs (28), **characterized in that**, with an input device (52) that is arranged on the agricultural vehicle (10), the value that is settable for the at least one variable representing the square-bale dimension or the value that is settable for the at least one variable representing the square-bale dimension and a value for a number of the first and the last packs (28', 28") of a square-bale baling operation is predefinable, depending on which the cutting device (42) is actuable.

2. Combination according to Claim 1, **characterized in that** the at least one variable representing the square-bale dimension is the square-bale length and/or the sum of the pre-baled packs (28, 28', 28"), wherein a length measuring device for the baled square bales (14) and/or a counting device for the pre-baled packs (28, 28', 28") is provided.

3. Combination according to either of Claims 1 and 2, **characterized in that** an electronic control unit (50) is provided, and the cutting device (24) comprises an electronically actuable setting device, wherein a sensor signal is able to be sent to the electronic control unit (50), said sensor signal being able to be generated depending on the at least one variable representing the square-bale dimension, and the electronic control unit (50) controls the cutting device (24) depending on the control signal.

4. Method for operating a combination according to one of Claims 1 to 3, comprising: a binding operation for a square bale (14) to be baled, a square-bale baling operation, the control of the cutting device (24) depending on the binding operation and on a variable representing a square-bale dimension during the square-bale baling operation, wherein the cutting device (24) is controlled during the start and the end of the square-bale baling operation, wherein the cutting device (50) is controlled such that, in each case when picking up harvested material for at least one of the first and for at least one of the last packs (28', 28") of a square-bale baling operation, the cutting device (24) is deactivated or is operated with a greater cut length compared with the other packs (28).

## Revendications

1. Combinaison d'un véhicule de traction agricole (10) et d'une presse à empaqueter (12) de grande taille destinée à presser des balles carrées (14), ladite combinaison comprenant un dispositif de réception (18) destiné à un produit de récolte reposant sur le sol, un dispositif de coupe (24) destiné à couper un produit de récolte reçu à au moins une longueur de coupe prédéterminée, une chambre de pré-pressage (20), un dispositif de rassemblement (26) et un canal de pressage (22) destiné à presser une balle carrée (14) à partir de paquets (28, 28', 28") de produit de récolte qui ont été pré-compactés dans la chambre de pré-pressage (20), le dispositif de rassemblement (26) pré-compactant le produit de récolte dans la chambre de pré-pressage (20) en paquets (28, 28', 28") et acheminant les paquets (28, 28', 28") jusque dans le canal de pressage (22), en outre un système de liage étant prévu pour ficeler la balle carrée (14), le dispositif de coupe (24) pouvant être commandé en fonction d'un processus de liage réalisé par le système de liage et d'au moins une dimension représentant la taille de la balle carrée de telle sorte que le dispositif de coupe (24) puisse être désactivé pour l'un au moins des premiers paquets et pour l'un au moins des derniers paquets (28', 28") d'un processus de pressage de balles carrées lors de la réception d'un produit de récolte ou puisse être utilisé avec une plus grande longueur de coupe par rapport aux autres paquets (28), **caractérisé en ce que** la valeur réglable pour l'au moins une dimension représentant la taille des balles carrées ou la valeur réglable pour l'au moins une dimension représentant la taille des balles carrées et une valeur pour un nombre de premiers et derniers paquets (28', 28") d'un processus de pressage de balles carrée, valeurs en fonction desquelles le dispositif de coupe (42) peut être activé, peuvent être prédéterminées au moyen d'un dispositif de saisie (52) disposé au niveau du véhicule agricole (10).

2. Combinaison selon la revendication 1, **caractérisée en ce que** l'au moins une dimension représentant la taille des balles carrées est la longueur des balles carrées et/ou la somme des paquets pré-pressés (28, 28', 28"), un dispositif de mesure de longueur des balles carrées pressées (14) et/ou un dispositif de comptage des paquets pré-pressés (28, 28', 28") étant prévus.

3. Combinaison selon l'une des revendications 1 ou 2, **caractérisée en ce qu'**une unité de commande électronique (50) est prévue et le dispositif de coupe (24) comprend un dispositif de réglage à commande électronique, l'unité de commande électronique (50) pouvant recevoir un signal de capteur qui peut être généré en fonction de l'au moins une dimension représentant la taille des balles carrées, et l'unité de commande électronique (50) commandant le dispositif de coupe (24) en fonction du signal de commande.

4. Procédé d'utilisation d'une combinaison selon l'une des revendications 1 à 3, le procédé comprenant les opérations suivantes : un processus de liage d'une balle carrée (14) à presser, un processus de pressage de balles carrées, la commande du dispositif de coupe (24) en fonction du processus de liage et d'une dimension représentant une taille des balles carrées pendant le processus de pressage des balles carrées,
la commande du dispositif de coupe (24) étant effectuée pendant le début et la fin du processus de pressage des balles carrées, le dispositif de coupe (50) étant commandé de manière à ce que le dispositif de coupe (24) soit désactivé pour l'un au moins des premiers paquets et l'un au moins des derniers paquets (28', 28") d'un processus de pressage de balles carrées lors de la réception du produit de récolte ou soit utilisé avec une plus grande longueur de coupe par rapport aux autres paquets (28).
